# EUROPÄISCHE PATENTSCHRIFT

(11) **EP 3 633 243 B1**
(45) Veröffentlichungstag und Bekanntmachung des Hinweises auf die Patenterteilung: **06.09.2023**
(21) Anmeldenummer: 19200166.7
(22) Anmeldetag: 27.09.2019
(51) Int. Cl.: F16J 15/3228, F16J 15/3284

(54) **DICHTELEMENT**
SEALING ELEMENT
ÉLÉMENT D'ÉTANCHÉITÉ

(30) Priorität: 01.10.2018 DE 102018124257
(43) Veröffentlichungstag der Anmeldung: 08.04.2020
(73) Patentinhaber: Carl Freudenberg KG, 69469 Weinheim (DE)
(72) Erfinder: Hintenlang, Guenter, 69518 Absteinach (DE); Heldmann, Martin, 64678 Lindenfels (DE); Klenk, Thomas, 69221 Dossenheim (DE); Hofmann, Jens, 68305 Mannheim (DE)
(74) Vertreter: Reiser & Partner Patentanwälte mbB

(56) Entgegenhaltungen:
- EP-A1- 3 396 216
- DE-A1-102015 224 042
- DE-A1-102016 010 926
- DE-U1- 29 916 854
- US-A1- 2015 226 332

## Beschreibung

Die Erfindung betrifft ein Dichtelement zur Herstellung einer elektrisch leitfähigen Verbindung zwischen einem ersten Maschinenelement und einem zweiten Maschinenelement, umfassend zumindest ein scheibenförmiges Leitelement und einen Tragring.

Aus der DE 10 2013 000 982 A1 ist eine Dichtung bekannt, umfassend einen Dichtring mit zumindest einer dynamisch beanspruchten Dichtlippe und einer Vorschaltdichtung. Die Vorschaltdichtung ist mit axialem Abstand benachbart zur Dichtlippe angeordnet und besteht aus einem elektrisch leitfähigen Werkstoff. Die Dichtlippe und die Vorschaltdichtung umschließen dichtend eine abzuschließende Oberfläche eines ersten Maschinenelementes. Dabei ist das erste Maschinenelement mit radialem Abstand benachbart zu einem zweiten Maschinenelement angeordnet. In dem durch den radialen Abstand gebildeten Spalt sind der Dichtring und die Vorschaltdichtung angeordnet. Das erste Maschinenelement und das zweite Maschinenelement sind durch die Vorschaltdichtung elektrisch leitend miteinander verbunden. Dazu berührt die Vorschaltdichtung sowohl das erste Maschinenelement als auch das zweite Maschinenelement anliegend. Die Vorschaltdichtung ist als Potenzialausgleichsring ausgebildet und besteht aus einem elektrisch leitfähigen, mit PTFE imprägnierten Vliesstoff.

Die Vorschaltdichtung bewirkt einen Potentialausgleich zwischen den beiden Maschinenelementen und verhindert mechanische Beschädigungen, die entstehen können, wenn unterschiedlich große elektrische Potentiale der Maschinenelemente durch einen elektrischen Spannungsdurchschlag ausgeglichen werden. Ein Spannungsdurchschlag kann einen Materialabtrag an dem Maschinenelement mit relativ geringer Ladung bewirken und eine Veränderung des Materialgefüges in dem Bereich, in dem der Spannungsdurchschlag erfolgt.

Aus der DE 10 2014 010 269 A1 ist eine weitere Vorschaltdichtung bekannt. Die Vorschaltdichtung umfasst eine kreisringförmig ausgebildete Scheibe aus einem elektrisch leitfähigen und luftdurchlässigen Werkstoff und einen Tragkörper, wobei die Scheibe separat ausgebildet und mit dem Tragkörper verbunden ist. Dabei ist der Tragkörper durch einen Dichtring gebildet.

Bei den vorbekannten Dichtungen ist das elektrisch leitfähig ausgebildete Dichtelement entlang der Stirnseite des Radialflansches des Dichtringes stoffschlüssig festgelegt.

US 2015/0226332 A1 zeigt einen Dichtung, bei der eine Dichtscheibe zwischen zwei Tragringen festgelegt ist.

DE 10 2016 010 926 A1 zeigt einen Wellenerdungsring, bei welchem ein Ableitkörper zwischen zwei Klemmringen festgelegt ist.

Der Erfindung liegt die Aufgabe zugrunde, ein Dichtelement der eingangs genannten Art bereitzustellen, welches einfach und kostengünstig herstellbar ist.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst das Dichtelement zur Herstellung einer elektrisch leitfähigen Verbindung zwischen einem ersten Maschinenelement und einem zweiten Maschinenelement zumindest ein scheibenförmiges Leitelement und einen Tragring, wobei der Tragring einen Axialflansch und einen Radialflansch aufweist, wobei das Leitelement aus einer elektrisch leitfähigen Folie ausgebildet ist und wobei das Leitelement zumindest abschnittsweise entlang des Axialflansches zwischen dem Tragring und dem zweiten Maschinenelement festgelegt ist. Dabei kann das Leitelement mittels einer Klemmverbindung oder mittels einer Klebeverbindung an dem Axialflansch festgelegt sein.

Eine Klemmverbindung von Dichtscheibe und Tragring ist besonders einfach herstellbar. Insbesondere können Vorbehandlungsschritte von Tragring und/oder Leitelement entfallen, welche zumeist für eine stoffschlüssige Anbindung des Leitelementes an den Tragring erforderlich sind. Das Leitelement ist aus elektrisch leitfähigem Material ausgebildet und wird so relativ zu dem Tragring positioniert, dass sich eine Klemmvorrichtung ergibt, welche das Leitelement ortsfest fixiert.

Das Leitelement erstreckt sich dabei erfindungsgemäß zumindest abschnittsweise entlang des Axialflansches des Tragringes. Bei dieser Ausgestaltung erfolgt eine Anpressung des Leitelementes nicht nur in axialer Richtung sondern auch in radialer Richtung. Je nach Ausgestaltung des Tragrings kann das Leitelement dabei direkt an die Innenwand des zweiten Maschinenelementes angepresst werden. Hierbei ist vorteilhaft, dass ein direkter Kontakt des Leitelementes an das zweite Maschinenelement gegeben ist, wobei sich eine verhältnismäßig große Anlagefläche für die elektrische Kontaktierung ergibt.

Erfindungsgemäß ist ein Anpresselement vorgesehen, welches mittels elastischer Verformung die Klemmverbindung des Leitelementes zwischen dem Tragring und dem zweiten Maschinenelement bewirkt. Das Anpresselement kann aus einem O-Ring ausgebildet sein, welches zwischen Axialflansch und Leitelement, bzw. zwischen Leitelement und zweitem Maschinenelement platziert ist und die Klemmverbindung bewirkt. Das Anpresselement kann aber auch als Elastomerspur ausgebildet sein, welche direkt an den Tragring angeformt ist. Das Anpresselement kann auch einen rechteckigen Querschnitt aufweisen, welches in das Dichtelement eingelegt ist.

Das Anpresselement kann ein separates Element sein, welches auf den Innenring aufgesetzt ist. Alternativ kann das Anpresselement auch direkt an den Innenring angeformt, bzw. anvulkanisiert sein. Das Anpresselement kann auch mittels einer Klebeverbindung auf dem Innenring fixiert sein.

Als Werkstoff für das Anpresselement kommen vorzugsweise elastomere Werkstoffe in Betracht. Diese haben den Vorteil, dass die erforderliche Kraft für die elastische Verformung geringer ist als bei metallischen Werkstoffen. Das Anpresselement kann zwischen Dichtscheibe und Tragring oder zwischen Dichtscheibe und zweitem Maschinenelement angeordnet sein. Im Bereich des Anpresselementes wird das Leitelement stärker komprimiert, was mit einer verbesserten Klemmwirkung einhergeht.

Das Leitelement ist scheibenförmig aus einer metallischen Folie ausgebildet. Denkbar sind in diesem Zusammenhang insbesondere Folien aus Aluminium oder Kupfer.

Um lokal die Klemmkraft zu erhöhen, kann der Tragring mit einer Anpresskontur versehen sein. Die Anpresskontur kann beispielsweise in Form einer umlaufenden Sicke ausgebildet sein, welche außenumfangsseitig aus dem Axialflansch hervorsteht. Alternativ ist auch denkbar, dass entlang des Axialflansches ein umlaufender Vorsprung vorgesehen ist.

Das Leitelement ist zwischen Tragring und zweitem Maschinenelement festgelegt. Bei dieser Ausgestaltung weist das zweite Maschinenelement vorzugsweise einen Absatz mit einer Radialschulter auf. Der Tragring ist vorzugsweise L-förmig ausgebildet und umfasst einen Radialflansch und einen Axialflansch. Der Axialflansch ist außenumfangsseitig an dem Radialflansch angeordnet. Bei dieser Ausgestaltung bildet sich eine Klemmverbindung zwischen der Radialschulter des zweiten Maschinenelementes und dem Tragring. Das Leitelement ist zwischen Tragring und zweitem Maschinenelement eingeklemmt.

Vorzugsweise erstreckt sich das Leitelement entlang des Radialflansches und zumindest abschnittsweise entlang des Axialflansches des Tragringes. In diesem Fall verbindet das Leitelement das erste Maschinenelement und das zweite Maschinenelement. In diesem Fall ist es nicht erforderlich, dass der Tragring elektrisch leitfähig ausgerüstet ist. Erstreckt sich das Anpresselement bis an das dem ersten Maschinenelement zugewandten freien Ende des Leitelementes, liegt das Leitelement mit radialer Vorspannung an dem ersten Maschinenelement an, wobei sich das Leitelement nach Montage abschnittsweise in Axialrichtung vorwölbt. Dadurch ist eine elektrisch leitfähige Verbindung von Dichtscheibe und erstem Maschinenelement gegeben.

Die elektrisch leitfähige Verbindung von Leitelement und zweitem Maschinenelement ergibt sich bei dieser Ausgestaltung dadurch, dass das Leitelement durch die Klemmverbindung direkt an das zweite Maschinenelement, bzw. an die Radialschulter des zweiten Maschinenelementes angepresst ist.

Erfindungsgemäß umfasst der Tragring einen Innenring und einen Außenring, wobei das Leitelement zwischen Innenring und Außenring festgelegt ist. Bei dieser Ausgestaltung ergibt sich die Klemmverbindung zwischen Innenring und Außenring. Der Vorteil ist, dass das Dichtelement samt Leitelement als vormontierte Einheit ausgebildet sein kann. Bei dieser Ausgestaltung ist zumindest der Außenring elektrisch leitfähig ausgebildet. Bei dieser Ausgestaltung erfolgt eine Verklemmung des Leitelementes zwischen dem Innenring und dem Außenring.

Der Innenring und der Außenring weisen jeweils einen Radialflansch und einen Axialflansch auf, wobei der Außendurchmesser des Axialflansches des Innenrings im Wesentlichen dem Innendurchmesser des Axialflansches des Außenrings entspricht. Das Leitelement erstreckt sich ausgehend von dem Tragring radial nach innen und liegt mit elastischer Vorspannung dichtend außenumfangsseitig auf dem ersten Maschinenelement an. Dabei ist das Leitelement in eine Axialrichtung vorgewölbt, welche der Erstreckung des Axialflansches des Tragrings entgegengesetzt ist.

Das freie Ende des Axialflansches des Außenrings kann radial nach innen abgebogen sein und dabei zumindest teilweise den Axialflansch des Innenrings überdecken. Dadurch kann verhindert werden, dass sich der Innenring vom Außenring löst.

Der Innenring kann an dem dem Radialflansch zugeordneten Abschnitt des Axialflansches eine Querschnittsverjüngung aufweisen. Durch die Querschnittsverjüngung ergibt sich ein Aufnahmeraum in welchem sich das Leitelement erstrecken kann. Bei dieser Ausgestaltung kann sich das Leitelement entlang des Radialflansches von Innenring und Außenring und abschnittsweise auch entlang des Axialflansches von Innenring und Außenring erstrecken.

Der Tragring kann einen zumindest einen Zwischenring umfassen, wobei das Leitelement zwischen Innenring und Zwischenring und zumindest ein weiteres Element zwischen Zwischenring und Außenring festgelegt ist. Je nach Ausgestaltung können dabei mehrere Elemente vorgesehen sein, wobei jeweils zwischen dem Innenring, den einzelnen Zwischenringen und dem Außenring Leitelement, bzw. ein weiteres Element angeordnet ist. Dabei können Elemente vorgesehen sein, die aus voneinander abweichenden Werkstoffen bestehen.

Die zwischen Innenring, Zwischenring und Außenring festgelegten Elemente liegen mit radialer Vorspannung auf dem ersten Maschinenelement an und sind in einer Axialrichtung vorgewölbt. Zumindest das Leitelement ist, ebenso wie der Außenring, elektrisch leitfähig ausgerüstet. Der Innenring und/oder der Zwischenring können ebenfalls elektrisch leitfähig sein.

In einer vorteilhaften Ausgestaltung ist das Leitelement elektrisch leitfähig ausgebildet und das weitere Element weist eine weichmagnetische Ausrüstung auf und fungiert als elektromagnetische Abschirmung zur Abschirmung elektromagnetischer Störwellen. Alternativ ist es auch denkbar, dass der Innenring oder der Zwischenring eine derartige weichmagnetische Ausrüstung aufweisen. Insofern ermöglicht die Ausgestaltung des Dichtelementes mit zwei Elementen sowohl die Herstellung einer elektrisch leitfähigen Verbindung zwischen erstem Maschinenelement und zweitem Maschinenelement und - bei entsprechender Ausrüstung - auch eine Abschirmung gegenüber elektromagnetischen Störwellen.

Auch bei dieser Ausgestaltung ist es denkbar, dass der Axialflansch des Außenringes an dessen freien Ende nach innen umgebördelt ist und so den Axialflansch des Innenringes überdeckt, so dass das Leitelement und der Zwischenring zwischen Innenring und Außenring eingeklemmt sind, wobei der Innenring formschlüssig an dem Außenring verriegelt ist.

An dem Innenring kann ein Radialwellendichtring angeordnet sein. Dieser ist vorzugsweise an dem radial inneren freien Ende des Radialflansches des Innenrings festgelegt. Der Radialwellendichtring weist dabei eine Dichtlippe auf, welche in Richtung des ersten Maschinenelementes weist. Das Leitelement erstreckt sich bis unter die Dichtlippe und ist insofern zwischen Dichtlippe und erstem Maschinenelement angeordnet. Die Dichtlippe drückt das Leitelement mit elastischer Vorspannung radial an das erste Maschinenelement an. Dabei kann die radiale Vorspannung vergrößert werden, wenn der Dichtlippe ein Federelement, beispielsweise eine Ringwendelfeder zugeordnet ist.

Alternativ kann an dem Innenring eine Elastomerspur angeordnet sein. Dabei kann aus der Elastomerspur ein Radialwellendichtring ausgeformt sein. Des Weiteren kann die Elastomerspur die dem Außenring zugeordnete Stirnseite des Radialflansches und die dem zweiten Maschinenelement zugeordnete Fläche des Axialflansches bedecken. Im Bereich des Axialflansches bildet die Elastomerspur eine statische Dichtung. Zwischen Innenring und Außenring bewirkt die Elastomerspur ein Einklemmen des Leitelementes. Die Dichtlippe des Radialwellendichtringes bewirkt ferner eine Anpressung des Leitelementes an das erste Maschinenelement.

Einige Ausgestaltungen des erfindungsgemäßen Dichtelementes werden nachfolgend anhand der Figuren näher erläutert. Diese zeigen, jeweils schematisch:
- Fig. 1: im Schnitt ein nicht beanspruchtes Dichtelement, wobei das Leitelement zwischen Tragring und Gehäuse geklemmt ist;
- Fig. 2: im Schnitt ein Dichtelement, dessen Tragring einen Innenring und einen Außenring aufweist;
- Fig. 3: ein Dichtelement gemäß Fig. 2 mit formschlüssiger Verbindung von Innenring und Außenring;
- Fig. 4: ein Dichtelement mit einem an den Innenring angeformten Radialwellendichtring.

Die Figuren zeigen ein Dichtelement 1 zur Herstellung einer elektrisch leitfähigen Verbindung zwischen einem ersten Maschinenelement 2 und einem zweiten Maschinenelement 3. Bei den vorliegenden Ausgestaltungen ist das erste Maschinenelement 2 eine rotierende Welle und das zweite Maschinenelement 3 ein Gehäuse. Das erste Maschinenelement 2 und das zweite Maschinenelement 3 können dabei Bestandteil eines elektrischen Antriebes eines Kraftfahrzeuges sein.

Das Dichtelement 1 umfasst zumindest ein Leitelement Dichtscheibe 4 und einen Tragring 5. Dabei besteht das Leitelement 4 aus einer elektrisch leitfähigen Folie. Bei der vorliegenden Ausgestaltung ist das Leitelement 4 aus Metall ausgebildet und besteht aus Aluminium. Das Leitelement 4 ist mittels einer Klemmverbindung an dem Tragring 5 festgelegt. Dazu ist zwischen Leitelement 4 und Tragring 5 ein Anpresselement 15 angeordnet.

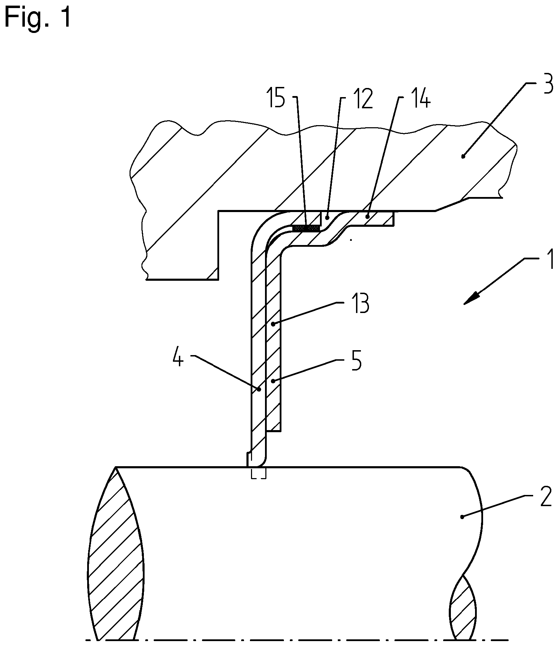

Bei der nicht beanspruchten Ausgestaltung gemäß Figur 1 ist das Leitelement 4 zwischen dem Tragring 5 und dem zweiten Maschinenelement 3 festgelegt. Dabei liegt das Leitelement 4 stirnseitig an dem Radialflansch 13 des Tragrings 5 an und erstreckt sich abschnittsweise auch außenumfangsseitig über den Axialflansch 14 des Tragrings 5. Aus dem zweiten Maschinenelement 3, dem Gehäuse ist eine Radialschulter ausgebildet, wobei das Leitelement 4 nach Montage zwischen der Radialschulter des zweiten Maschinenelementes 3 und dem Tragring 5 eingeklemmt und dadurch ortsfest fixiert ist.

Das Anpresselement ist in Form eines O-Ringes ausgebildet. Der O-Ring besteht aus elastomerem Werkstoff und bewirkt aufgrund der elastischen Verformung eine Anpressung des Leitelementes 4 an das zweite Maschinenelement 3.

Der Tragring 5 weist einen Absatz auf, durch welchen sich ein Aufnahmeraum 12 für das Leitelement 4 ergibt. Dabei ist der Absatz so ausgebildet, dass das Anpresselement 15 und das Leitelement 4 zwischen dem Tragring 5 und dem zweiten Maschinenelement 3, hier einem Gehäuse, eingeklemmt sind.

Bei dieser Ausgestaltung bildet das Leitelement 4 gegenüber dem ersten Maschinenelement 2 eine dynamische Dichtung und gegenüber dem zweiten Maschinenelement 3 eine statische Dichtung. Des Weiteren erstreckt sich das Leitelement 4 von dem ersten Maschinenelement 2 bis zu dem zweiten Maschinenelement 3, so dass die elektrisch leitfähige Verbindung ausschließlich über das Leitelement 4 erfolgen kann. Insofern ist es bei dieser Ausgestaltung nicht erforderlich, dass der Tragring 5 aus elektrisch leitfähigem Werkstoff besteht. Insofern ist es denkbar, den Tragring 5 aus Kunststoff, vorzugsweise spritzgießfähigem Kunststoff auszubilden.

Der Durchgang des Leitelementes 4, durch welchen das erste Maschinenelement 2, eine Welle, hindurchragt, ist vorzugsweise rund ausgebildet. Alternativ kann der Durchgang aber auch nicht-rund ausgebildet sein und beispielsweise eine gezackte oder gewellte Kontur aufweisen.

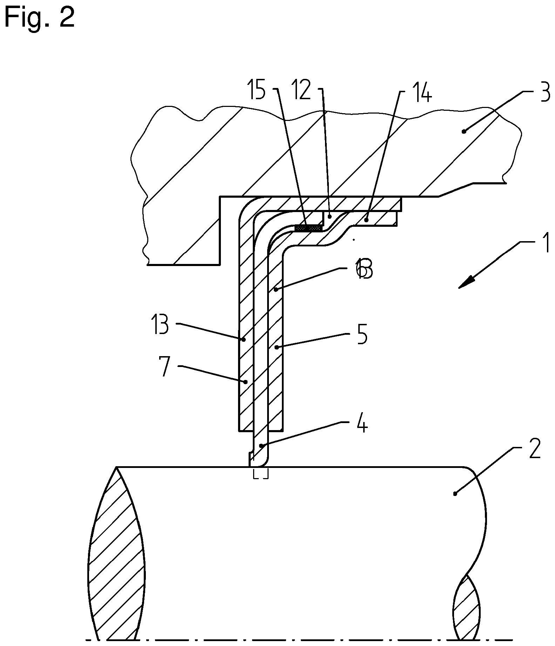

Figur 2 zeigt eine alternative Ausgestaltung des in Figur 1 gezeigten

Dichtelementes 1. Diese Ausgestaltung ist erfindungsgemäß. Bei der Ausgestaltung gemäß Figur 2 umfasst der Tragring 5 einen Innenring 6 und einen Außenring 7, wobei das Leitelement 4 zwischen dem Innenring 6 und dem Außenring 7 festgelegt ist. Bei dieser Ausgestaltung ist zumindest der Außenring 7 aus elektrisch leitfähigem Werkstoff ausgebildet. Vorzugsweise sind der Innenring 6 und der Außenring 7 als Stanzteile ausgebildet und bestehen aus metallischem Werkstoff. Das Leitelement 4 ist zwischen dem Innenring 6 und dem Außenring 7 eingeklemmt und dort ortsfest fixiert, wobei die Anpressung durch das Anpresselement 15 erfolgt. Der Innenring 6 und der Außenring 7 weisen jeweils einen Radialflansch 13 und einen Axialflansch 14 auf, wobei der Außendurchmesser des Axialflansches 14 des Innenrings 6 im Wesentlichen dem Innendurchmesser des Axialflansches 14 des Außenrings 7 entspricht. Der Innendurchmesser und der Außendurchmesser sind so gewählt, dass sich eine Presspassung ergibt, so dass der Innenring 6, das Anpresselement 15, das Leitelement 4 und der Außenring 7 verliersicher ineinander gefügt sind. Bei dieser Ausgestaltung liegt der Radialflansch 13 des Außenrings 7 an der Radialschulter des zweiten Maschinenelementes 3 an. Bei dieser Ausgestaltung ist ferner im Bereich des Axialflansches 14 des Innenrings 6 eine Querschnittsverjüngung ausgebildet, welche sich an den Radialflansch 13 des Innenrings 6 anschließt. Dadurch bildet sich zwischen Innenring 6 und Außenring 7 ein Aufnahmeraum 12 für das Leitelement 4.

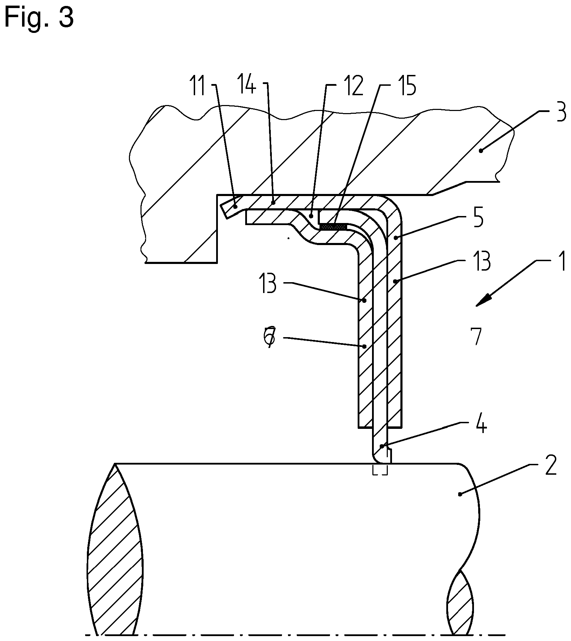

Die Ausgestaltung gemäß Figur 3 zeigt eine Weiterbildung des in Figur 2 gezeigten Dichtelementes 1. Bei dieser Ausgestaltung ist das freie Ende 11 des Axialflansches 14 des Außenringes 7 radial nach innen gebogen. Dazu wird das freie Ende 11 nach der Montage des Leitelementes 4 und des Innenringes 6 nach innen umgebördelt. Dadurch ist der Innenring 6 formschlüssig in dem Außenring 7 verriegelt. Des Weiteren ist es durch die sich dadurch ergebende Querschnittsverjüngung im Bereich des freien Endes 11 möglich, das Dichtelement 1 so in dem zweiten Maschinenelement 3 so positionieren, dass das freie Ende 11 an der Radialschulter des zweiten Maschinenelementes 3 anliegt. Des Weiteren ist im Bereich des Axialflansches 14 des Innenrings 6 eine Querschnittsverjüngung ausgebildet, welche sich an den Radialflansch 13 des Innenrings 6 anschließt. Dadurch bildet sich zwischen Innenring 6 und Außenring 7 ein Aufnahmeraum 12 für das Leitelement 4 und das Anpresselement 15.

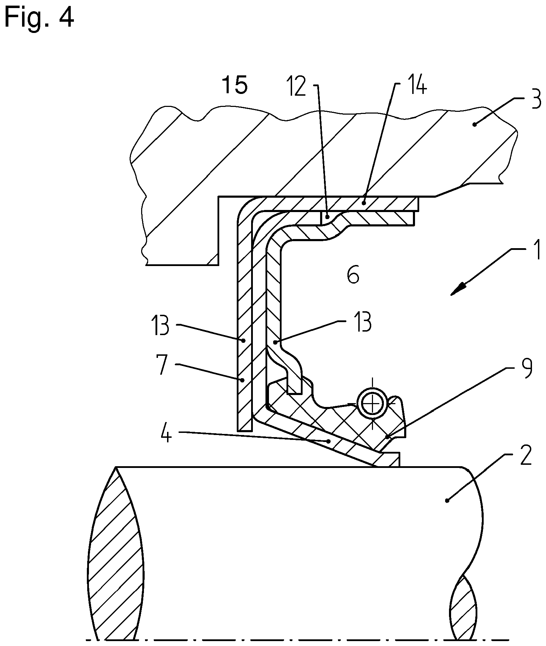

Bei dieser Ausgestaltung gemäß Figur 4 ist an dem dem ersten Maschinenelement 2 zugeordneten Ende des Radialflansches 13 des Außenrings 7 ein Radialwellendichtring 9 angeordnet. Der Radialwellendichtring 9 umfasst einen Tragkörper, der bei der vorliegenden Ausgestaltung den Innenring 6 bildet. Der Radialwellendichtring 9 umfasst ferner eine Dichtlippe aus elastomerem Werkstoff, welche direkt an den Innenring 6 angeformt ist. Die Dichtlippe wird mittels einer Ringwendelfeder mit radialer Vorspannung an das erste Maschinenelement 2 angepresst. Das Leitelement 4 erstreckt sich bis unter die Dichtlippe, so dass das Leitelement 4 durch die Dichtlippe mit radialer Vorspannung an das erste Maschinenelement 2 angedrückt wird. An den Innenring 6 ist ferner eine Klebeschicht angeformt, welche sich bis über den Axialflansch 14 des Innenrings 6 erstreckt. Der Radialwellendichtring 9 bildet das Anpresselement 15. Durch die Klebeschicht ist das Leitelement 4 sicher zwischen Innenring 6 und Außenring 7 fixiert. Zwischen Leitelement 4 und Außenring 7 ist darüber hinaus eine elektrisch leitfähige Anbindung gegeben.

## Patentansprüche

1. Dichtelement (1) zur Herstellung einer elektrisch leitfähigen Verbindung zwischen einem ersten Maschinenelement (2) und einem zweiten Maschinenelement (3), umfassend zumindest ein scheibenförmiges Leitelement (4) und einen Tragring (5), wobei der Tragring (5) einen Axialflansch (14) und einen Radialflansch (13) aufweist, wobei das Leitelement (4) aus einer elektrisch leitfähigen Folie ausgebildet ist, wobei der Tragring (5) einen Innenring (6) und einen Außenring (7) umfasst, wobei das Leitelement (4) zwischen dem Innenring (6) und dem Außenring (7) festgelegt ist, und wobei der Außenring (7) elektrisch leitfähig ausgebildet ist, **dadurch gekennzeichnet, dass** das Leitelement (4) zumindest abschnittsweise entlang des Axialflansches (14) zwischen dem Tragring (5) und dem zweiten Maschinenelement (3) festgelegt ist, wobei ein Anpresselement (15) vorgesehen ist, welches mittels elastischer Verformung das Leitelement (4) zwischen dem Tragring (5) und dem zweiten Maschinenelement (3) festlegt.

2. Dichtelement nach Anspruch 1, **dadurch gekennzeichnet, dass** das Anpresselement (15) aus elastomerem Werkstoff ausgebildet ist.

3. Dichtelement nach Anspruch 1 oder 2, **dadurch gekennzeichnet, dass** an dem Innenring (6) ein Radialwellendichtring (9) angeordnet ist, wobei der Radialwellendichtring (9) das Anpresselement (15) bildet.

4. Dichtelement nach einem der Ansprüche 1 bis 3, **dadurch gekennzeichnet, dass** an dem Innenring (6) eine Elastomerspur (10) angeordnet ist, wobei die Elastomerspur (10) das Anpresselement (15) bildet.

## Claims

1. Sealing element (1) for producing an electrically conductive connection between a first machine element (2) and a second machine element (3), comprising at least one disc-shaped conducting element (4) and a support ring (5), the support ring (5) comprising an axial flange (14) and a radial flange (13), the conducting element (4) being formed from an electrically conductive foil, wherein the support ring (5) includes an inner ring (6) and an outer ring (7), the conducting element (4) being secured between the inner ring (6) and the outer ring (7), wherein the outer ring (7) is electrically conductive, **characterized in that** the conducting element (4) being secured at least in sections along the axial flange (14) between the support ring (5) and the second machine element (3), wherein a pressing element (15) is provided which, by means of elastic deformation, secures the conducting element (4) between the support ring (5) and the second machine element (3).

2. Sealing element according to claim 1, **characterised in that** the pressing element (15) is formed of elastomeric material.

3. Sealing element according to claim 1 or 2, **characterised in that** a radial shaft sealing ring (9) is arranged on the inner ring (6), the radial shaft sealing ring (9) forming the pressing element (15).

4. Sealing element according to any of claims 1 to 3, **characterised in that** an elastomer track (10) is arranged on the inner ring (6), the elastomer track (10) forming the pressing element (15).

## Revendications

1. Élément d'étanchéité (1) pour la réalisation d'un assemblage électriquement conducteur entre un premier élément de machine (2) et un second élément de machine (3), comprenant au moins un élément conducteur (4) en forme de disque et une bague de support (5), dans lequel la bague de support (5) comporte une bride axiale (14) et une bride radiale (13), dans lequel l'élément conducteur (4) est réalisé à partir d'un film électriquement conducteur, dans lequel la bague de support (5) comprend une bague intérieure (6) et une bague extérieure (7), dans lequel l'élément conducteur (4) est fixé entre la bague intérieure (6) et la bague extérieure (7), et dans lequel la bague extérieure (7) est réalisée de manière électriquement conductrice, **caractérisé en ce que** l'élément conducteur (4) est fixé, au moins par sections, le long de la bride axiale (14) entre la bague de support (5) et le second élément de machine (3), dans lequel il est prévu un élément de pression (15) qui fixe, par déformation élastique, l'élément conducteur (4) entre la bague de support (5) et le second élément de machine (3).

2. Élément d'étanchéité selon la revendication 1, **caractérisé en ce que** l'élément de pression (15) est réalisé à partir d'un matériau élastomère.

3. Élément d'étanchéité selon la revendication 1 ou 2, **caractérisé en ce qu'**une bague d'étanchéité à lèvre radiale (9) est agencée sur la bague intérieure (6), dans lequel la bague d'étanchéité à lèvre radiale (9) forme l'élément de pression (15).

4. Élément d'étanchéité selon l'une des revendications 1 à 3, **caractérisé en ce qu'**une trace d'élastomère (10) est agencée sur la bague intérieure (6), dans lequel la trace d'élastomère (10) forme l'élément de pression (15).
